# EUROPÄISCHE PATENTSCHRIFT

(11) **EP 1 558 462 B1**
(45) Veröffentlichungstag und Bekanntmachung des Hinweises auf die Patenterteilung: **16.09.2009**
(21) Anmeldenummer: 03772268.3
(22) Anmeldetag: 28.10.2003
(51) Int. Cl.: B60N 3/10

(54) **GETRÄNKEHALTER**
DRINKS HOLDER
PORTE-BOISSONS

(30) Priorität: 29.10.2002 DE 20216672 U
(43) Veröffentlichungstag der Anmeldung: 03.08.2005
(73) Patentinhaber: TRW Automotive Electronics & Components GmbH, 78315 Radolfzell (DE)
(72) Erfinder: WAGNER, Jörg, 67661 Kaiserslautern (DE)
(74) Vertreter: Prinz & Partner
(86) Internationale Anmeldenummer: PCT/EP2003/011943
(87) Internationale Veröffentlichungsnummer: WO 2004/039628

(56) Entgegenhaltungen:
- EP-A- 0 447 263
- DE-A- 19 845 930
- DE-U- 29 913 709
- DE-U- 29 920 997
- US-A- 2 778 702
- US-A- 4 728 018
- US-A- 4 733 908
- US-A- 4 907 775
- US-A- 5 829 726
- US-A1- 2002 096 531
- US-B1- 6 349 913

## Beschreibung

Die Erfindung betrifft einen Getränkehalter, wie er insbesondere in Kraftfahrzeugen verwendet wird.

Ein solcher Getränkehalter muss eine Vielzahl von Anforderungen erfüllen. Zum einen soll er eine Vielzahl von unterschiedlichen Behältnissen zuverlässig aufnehmen und festhalten können. Zum anderen soll er aus einer Betriebsstellung, in der er die Behältnisse aufnehmen kann, in eine möglichst platzsparende Bereitschaftsstellung überführt werden können, und umgekehrt. In der Bereitschaftsstellung soll der Getränkehalter vorzugsweise nicht sichtbar sein, beispielsweise hinter einer Abdeckung versteckt, oder in anderer Weise so in eine ihn umgebende Verkleidung integriert, dass ein harmonischer optischer Gesamteindruck entsteht. Schließlich ist es wünschenswert, dass das Behältnis gekühlt oder erwärmt werden kann.

Beispiele für aus dem Stand der Technik bekannte Getränkehalter finden sich in der US 4 733 908, der DE 198 45 930, der US 2002/096531 und der US 4 728 018.

Die bisher bekannten Getränkehalter haben diese Anforderungen nicht immer überzeugend erfüllt.

Die Aufgabe der Erfindung besteht darin, einen Getränkehalter zu schaffen, der die oben genannten Anforderungen erfüllt.

Zu diesem Zweck ist erfindungsgemäß ein Getränkehalter mit den Merkmalen des Anspruchs 1 vorgesehen. Die Haltebügel können dann, wenn der Getränkehalter in der Unterlage versenkt werden soll, flach zusammengelegt werden, so daß sie im Umriß nicht über die Abdeckung hinausstehen. Die Abdeckung kann sehr klein ausgeführt werden, so daß sie optisch unauffällig ist.

Eine vorteilhafte Ausgestaltung der Erfindung ergebilt sich aus dem Unteranspruch.

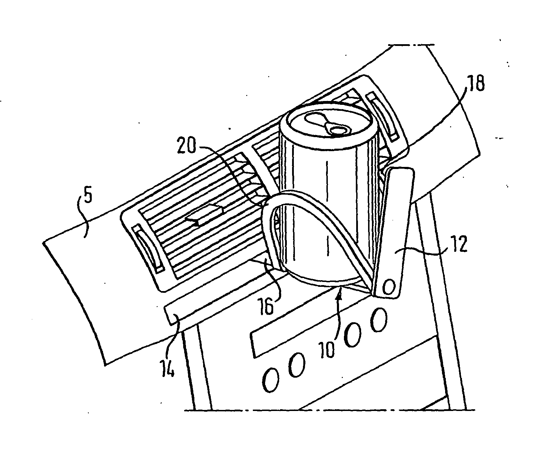

Die Erfindung wird nachfolgend anhand einer Ausführungsform beschrieben, die in der beigefügten Zeichnung dargestellt ist. In dieser zeigt die einzige Figur einen erfindungsgemäßen Getränkehalter.

In der einzigen Figur ist ein Ausschnitt eines Armaturenbrettes 5 gezeigt, in welchem ein Getränkehalter 10 angeordnet ist. Der Getränkehalter besteht aus einer Abdeckung 12, die bündig in einer Öffnung 14 im Armaturenbrett 5 angeordnet werden kann, sowie einem Träger 16, an dem die Abdeckung 12 angebracht ist, sowie zwei Haltebügeln 18, 20, die ebenfalls am Träger 16 angebracht sind. Der Haltebügel 18 ist hier einstückig mit dem Träger 16 ausgebildet, während der Haltebügel 20 klappbar ist. Der Haltebügel 20 kann an den Haltebügel 18 angelegt werden, so daß die beiden Haltebügel hinter der Abdeckung 12 zu liegen kommen. Die Abdeckung 12 kann dann zusammen mit den beiden Haltebügeln 18, 20 so verschwenkt werden, daß sie in die Öffnung 14 eingedrückt werden kann. Dort wird sie von einem Druck-Druck-Verriegelungsmechanismus gehalten. Durch einen erneuten Druck auf die Abdeckung 12 wird dieser Verriegelungsmechanismus freigegeben, so daß der Träger 16 aus dem Armaturenbrett herausgeschoben wird und sich der Getränkehalter entfaltet.

Hervorzuheben ist, daß die Kontur der Abdeckung 12 sehr viel schmäler ist als die Abmessung des Getränkehalters im ausgeklappten Zustand.

## Patentansprüche

1. Getränkehalter, insbesondere für ein Kraftfahrzeug, mit einer Abdeckung (12), die bewegbar an einer Unterlage (5, 7) angebracht ist, und zwei Haltebügeln (18, 20), die verschwenkbar sind zwischen einer flach zusammengelegten Stellung und einer gespreizten Stellung, in der sie ein Behältnis aufnehmen können, wobei die Abdeckung (12) an einem Träger (16) angebracht ist, der versenkbar an der Unterlage (5, 7) angebracht ist, wobei einer (18) der Haltebügel einstückig mit dem Träger (16) verbunden ist und der andere (20) der Haltebügel klappbar mit dem Träger (16) verbunden ist, wodurch der klappbare Haltebügel (20) an den anderen Haltebügel (18) angelegt werden kann, so dass die beiden Haltebügel hinter der Abdeckung (12) zu liegen kommen und im Umriss nicht über die Abdeckung hinausstehen, und die Abdeckung (12) mit den beiden Haltebügeln (18, 20) in die Öffnung (14) eingedrückt werden kann, so dass sie diese bündig verschließt, wobei die Abdeckung (12) aus der Unterlage (5, 7) herausgeschoben werden kann und der klappbare Haltebügel (20) vom einstückig mit der Abdeckung (12) verbundenen Haltebügel (18) wegklappt, wodurch sich der Getränkehalter entfaltet, wobei die Kontur der Abdeckung (12) sehr viel schmäler ist als die Abmessung des Getränkehalters im ausgeklappten Zustand.

2. Getränkehalter nach Anspruch 1, **dadurch gekennzeichnet, dass** die Abdeckung (12) klappbar an der Unterlage (7) angebracht ist.

## Claims

1. A cup holder, especially for a motor vehicle, comprising a cover (12) that is movably attached to a base (5, 7) and two holding brackets (18, 20) that can be pivoted between a flat collapsed position and a spread position in which they can receive a container, the cover (12) being mounted to a support (16) which is retractably attached to the base (5, 7), with one (18) of the holding brackets being integrally connected with the support (16) and the other (20) of the holding brackets being foldably connected with the support (16), whereby the foldable holding bracket (20) can be placed against the other holding bracket (18) so that the two holding brackets come to lie behind the cover (12) and their contours do not project beyond the cover, and the cover (12) with the two holding brackets (18, 20) can be pushed into the opening (14) to close it so as to be flush therewith, the cover (12) being adapted to be pushed out of the base (5, 7) and the foldable holding bracket (20) folding away from the holding bracket (18) that is integrally connected with the cover (12), whereby the cup holder unfolds, the contour of the cover (12) being very much narrower than the dimension of the cup holder in the folded-out condition.

2. The cup holder according to claim 1, **characterized in that** the cover (12) is foldably mounted to the base (7).

## Revendications

1. Porte-boissons, en particulier pour un véhicule automobile, comportant un couvercle (12) qui est monté mobile sur une console (5, 7), et deux étriers de retenue (18, 20) qui peuvent pivoter entre une position pliée à plat et une position écartée dans laquelle ils peuvent recevoir un réceptacle, le couvercle (12) étant monté sur un support (16) qui est monté escamotable sur la console (5, 7), un des étriers de retenue (18) étant relié d'un seul tenant avec le support (16) et l'autre étrier de retenue (20) étant relié avec le support (16) de manière rabattable, grâce à quoi l'étrier de retenue (20) rabattable peut être appliqué contre l'autre étrier de retenue (18) de telle sorte que les deux étriers de retenue viennent se placer derrière le couvercle (12) et, par leur périmètre, ne dépassent pas le couvercle, et le couvercle (12) peut être enfoncé avec les deux étriers de retenue (18, 20) dans l'ouverture (14) de telle sorte qu'il ferme celle-ci en affleurement, le couvercle (12) pouvant être retiré de la console (5, 7) et l'étrier de retenue (20) rabattable s'escamotant de l'étrier de retenue (20) relié au couvercle (12), grâce à quoi le porte-boissons se déploie, le contour du couvercle (12) étant beaucoup plus étroit que la dimension du porte-boissons à l'état sorti.

2. Porte-boissons selon la revendication 1, **caractérisé en ce que** le couvercle (12) est monté rabattable sur la console (7).
